(19) 

Europäisches Patentamt

European Patent Office

Office européen des brevets

(11) **EP 4 534 990 A1**

(12) **EUROPEAN PATENT APPLICATION**
published in accordance with Art. 153(4) EPC

(43) Date of publication:
**09.04.2025 Bulletin 2025/15**

(21) Application number: **23816059.2**

(22) Date of filing: **30.05.2023**

(51) International Patent Classification (IPC):
**G01N 27/22** (2006.01)

(52) Cooperative Patent Classification (CPC):
**G01N 27/22**

(86) International application number:
**PCT/JP2023/020115**

(87) International publication number:
**WO 2023/234302 (07.12.2023 Gazette 2023/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.05.2022 JP 2022088671**

(71) Applicant: **Kyocera Corporation
Kyoto-shi, Kyoto 612-8501 (JP)**

(72) Inventor: **IWAMOTO, Koichi
Kyoto-shi, Kyoto 612-8501 (JP)**

(74) Representative: **Viering, Jentschura & Partner
mbB
Patent- und Rechtsanwälte
Am Brauhaus 8
01099 Dresden (DE)**

(54) **BUBBLE FRACTION SENSOR, FLOW RATE METER USING SAME, AND LIQUID FEED TUBE**

(57)     A void fraction sensor according to the present disclosure includes an insulating pipe having a plurality of through holes through which a liquid flows, and a plurality of electrodes located inside or on the outer surface of the insulating pipe and facing each other across the plurality of through holes. The plurality of through holes have an elongated shape having a first direction and a second direction shorter than the first direction in a cross section perpendicular to the flow direction of the liquid. The plurality of electrodes face each other across the plurality of through holes in the second direction.

FIG. 5

EP 4 534 990 A1

## Description

### TECHNICAL FIELD

The present disclosure relates to a void fraction sensor for measuring a void fraction of a liquid such as liquid hydrogen, a flowmeter using the same, and a liquid transfer pipe.

### BACKGROUND OF INVENTION

With the recent trend of reducing greenhouse gas emissions, the use of hydrogen as a potent energy storage medium has been attracting attention. In particular, liquid hydrogen has a high volumetric efficiency and can be stored for a long period of time, and various techniques for utilizing liquid hydrogen have been developed. However, a method for accurately measuring the flow rate which is required in handling a large volume of liquid hydrogen for industrial use has not been established. A major reason for this is that liquid hydrogen is a fluid which is very easily vaporized and its gas-to-liquid ratio fluctuates greatly.

That is, liquid hydrogen is a liquid having an extremely low temperature (boiling point -253°C) and having very high thermal conductivity and low latent heat, which causes immediate generation of voids. Therefore, in a transfer pipe, liquid hydrogen is in a so-called two-phase flow in which gas and liquid are mixed. Because of the large fluctuation of the void content percentage, the flow rate of the liquid hydrogen cannot be accurately determined by only measuring the flow velocity in the transfer pipe, as with ordinary liquids.

In view of the above, a void fraction sensor that measures a void fraction indicating a gas phase volume percentage of the gas-liquid two-phase flow is under development. As such a void fraction sensor, Non-Patent Document 1 has proposed an electrostatic capacitance type void fraction sensor that measures an electrostatic capacitance using a pair of electrodes.

### CITATION LIST

### NON-PATENT LITERATURE

Non-Patent Document 1: Norihide MAENO et al. (5), "Void Fraction Measurement of Cryogenic Two Phase Flow Using a Capacitance Sensor", Trans. JSASS Aerospace Tech. Japan, Vol. 12, No. ists 29, pp. Pa_101-Pa_107, 2014

### SUMMARY

A void fraction sensor of the present disclosure includes an insulating pipe and at least two electrodes. The insulating pipe has a plurality of through holes through which a liquid flows. The at least two electrodes are located inside or on an outer surface of the insulating pipe, and face each other across the plurality of through holes. Each of the plurality of through holes has, in a cross section perpendicular to a flow direction of the liquid an elongated shape, and has a first side in a first direction and a second side in a second direction, the second side being shorter than the first side. The at least two electrodes face each other in the second direction, with the plurality of through holes located between the at least two electrodes.

A flowmeter of the present disclosure measures a flow rate of a liquid flowing through a transfer pipe. The flowmeter includes the void fraction sensor and a flow velocity meter. The flow velocity meter can measure a flow velocity at which the liquid flows in the through holes. A liquid transfer pipe of the present disclosure includes the flowmeter.

### BRIEF DESCRIPTION OF THE DRAWINGS

FIG. 1 is a schematic perspective view illustrating a void fraction sensor according to an embodiment of the present disclosure.

FIG. 2 is a schematic side view of the void fraction sensor illustrated in FIG. 1.

FIG. 3 is a cross-sectional view taken along line II-II of the void fraction sensor illustrated in FIG. 2.

FIG. 4 is a cross-sectional view taken along line IV-IV of the void fraction sensor illustrated in FIG. 2.

FIG. 5 is a cross-sectional view taken along line V-V of the void fraction sensor illustrated in FIG. 3.

FIG. 6 is an enlarged cross-sectional view of a P portion of the void fraction sensor illustrated in FIG. 3.

FIG. 7A is a schematic perspective view illustrating an insulating pipe of the void fraction sensor illustrated in FIGs. 3, 4, and 5.

FIG. 7B is a cross-sectional view taken along line M-M of the insulating pipe illustrated in FIG. 7A.

FIG. 7C is a cross-sectional view taken along line N-N of the insulating pipe illustrated in FIG. 7A.

FIG. 8A is a schematic perspective view illustrating a supply pipe and a discharge pipe of the void fraction sensor illustrated in FIG. 1.

FIG. 8B is a schematic perspective view illustrating the supply pipe and the discharge pipe illustrated in FIG. 8A as seen from the opposite side.

FIG. 8C is a vertical cross-sectional view of the supply pipe and the discharge pipe illustrated in FIGs. 8A and 8B.

FIG. 8D is a cross-sectional view taken along line Z-Z of the supply pipe and the discharge pipe illustrated in FIG. 8C.

FIG. 9 is a cross-sectional view taken along line IX-IX of the void fraction sensor illustrated in FIG. 2.

FIG. 10 is a schematic cross-sectional view illustrating a void fraction sensor according to another embodiment of the present disclosure.

FIG. 11 is a schematic explanatory view illustrating an example of a liquid transfer pipe including the void fraction sensor according to the present disclosure.

FIG. 12 is a schematic explanatory view illustrating the relationship between the void fraction sensor and the transfer pipe.

FIG. 13A is a schematic explanatory view illustrating another example of a liquid transfer pipe including the void fraction sensor according to the present disclosure.

FIG. 13B is a schematic side view of the liquid transfer pipe in FIG. 13A as seen from the arrow Q direction.

FIG. 14 is a schematic side view illustrating another example of the liquid transfer pipe according to the present disclosure.

DESCRIPTION OF EMBODIMENTS

In the capacitance type void fraction sensor proposed in Non-Patent Document 1, the cross-sectional shape of a pipe through which liquid nitrogen flows is a perfect circle. Therefore, in order to increase the supply amount of the liquid such as liquid nitrogen, it is necessary to increase the diameter of the pipe. However, when the diameter of the pipe is increased, the distance between the electrodes facing each other across the pipe is also increased. As a result, the intensity of the electrical signal is reduced, and therefore the measurement accuracy is reduced. In order to improve this, there is a method of increasing the area of the electrodes or increasing the applied voltage. However, if the area of the electrodes is increased, breakage due to the bonding stress of the large electrodes is likely to occur. If the voltage is increased, it is considered that sufficient safety may not be ensured.

Thus, the present disclosure has realized a void fraction sensor capable of improving measurement accuracy of a void fraction of a liquid even at a low temperature without reducing a supply amount of the liquid, a flowmeter using the same, and a liquid transfer pipe.

Hereinafter, a void fraction sensor according to an embodiment of the present disclosure will be described with reference to the drawings.

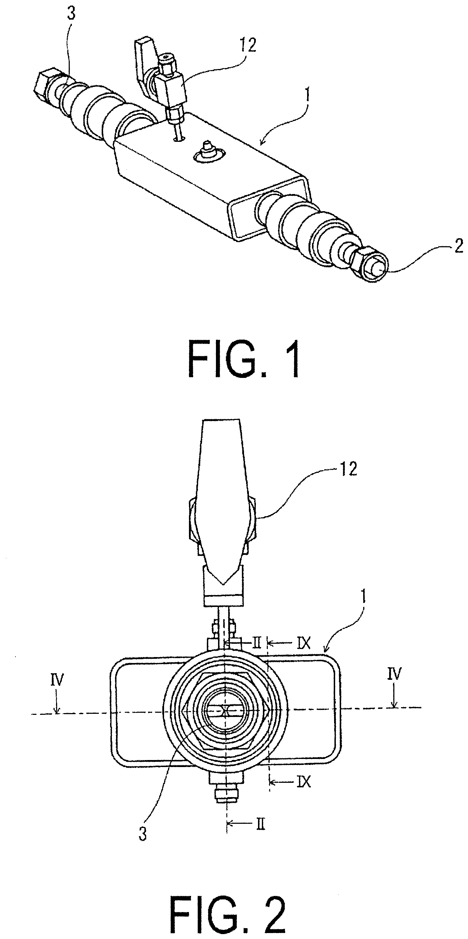

FIG. 1 is a schematic perspective view illustrating a void fraction sensor 1 according to an embodiment of the present disclosure, and FIG. 2 is a schematic side view thereof. The void fraction sensor 1 measures the void fraction of liquid. As illustrated in FIG. 1, a supply-side transfer pipe 2 and a discharge-side transfer pipe 3 for a liquid are connected to respective ends of the void fraction sensor 1.

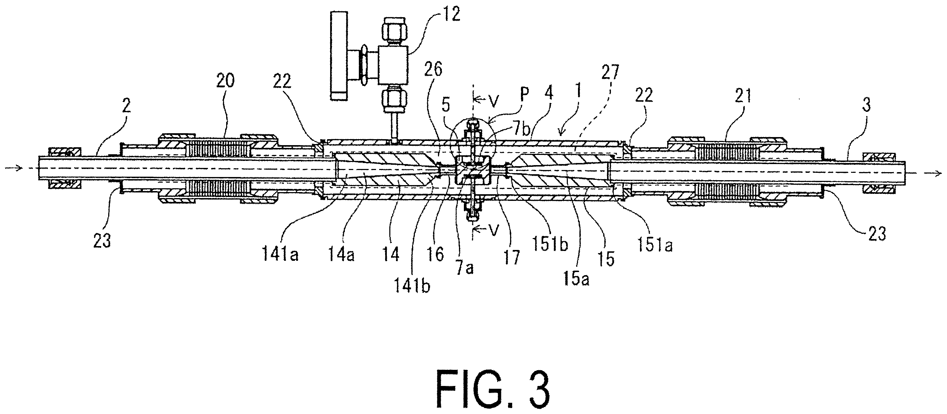

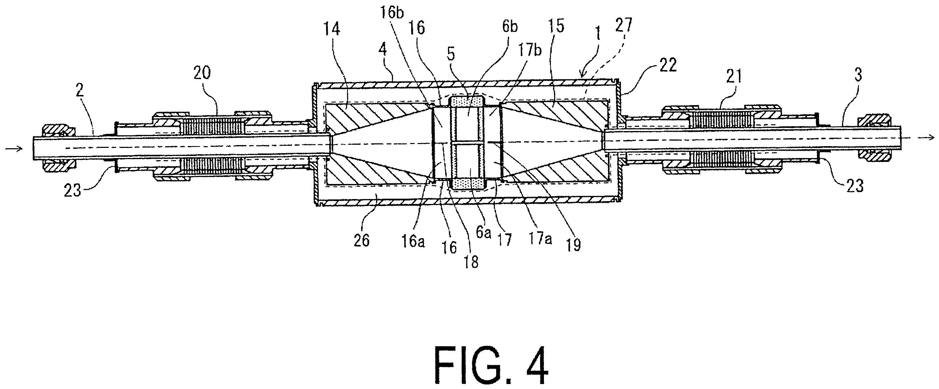

FIG. 3 is a cross-sectional view, taken along line II-II, of the void fraction sensor 1 illustrated in FIG. 2, and FIG. 4 is a cross-sectional view taken along line IV-IV in FIG. 2. The void fraction sensor 1 includes a vacuum container 4. An insulating pipe 5 is located at the center of the inside of the vacuum container 4. The insulating pipe 5 has two through holes 6a, 6b through which a liquid flows (see FIG. 4). The liquid may be any liquid that has a property of accumulating charge to enable measurement of the capacitance, and may be a low-temperature liquid or a cryogenic liquid. In the following description of the present disclosure, the liquid is occasionally referred to as a low-temperature liquid or a cryogenic liquid, by way of example. Electrodes 7a, 7b are located on the outer surface of the insulating pipe 5 (see FIG. 3). The electrode 7a faces the electrode 7b. The through holes 6a, 6b are located between the electrode 7a and the electrode 7b. The vacuum container 4 includes a vacuum exhaust valve 12. The vacuum exhaust valve 12 can maintain the inside of the vacuum container 4 as a vacuum space 26. The vacuum space 26 acts as a thermal barrier.

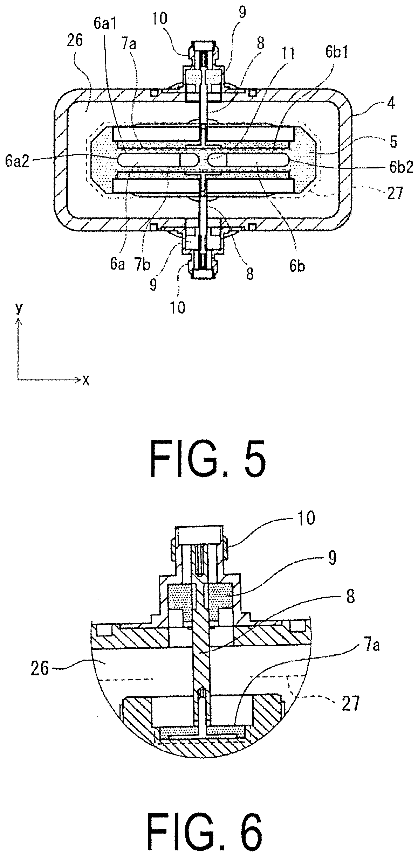

The configuration of the insulating pipe 5 will be described in more detail with reference to FIG. 5 which is a cross-sectional view taken along line V-V in FIG. 3. As described above, the insulating pipe 5 has two through holes 6a, 6b through which the cryogenic liquid flows, and a pair of electrodes 7a, 7b facing each other across the through holes 6a, 6b are located on the outer surface of the insulating pipe 5. The through holes 6a, 6b have an elongated cross-sectional shape perpendicular to the flow direction of the cryogenic liquid (i.e., the direction perpendicular to the paper surface in FIG. 5), and have first sides 6a1, 6b1 in a first direction (longitudinal direction, indicated as an x-direction in FIG. 5) and second sides 6a2, 6b2 in a second direction (indicated as a y-direction in FIG. 5), the second sides 6a2, 6b2 being shorter than the first sides 6a1. The second sides 6a2, 6b2 can be defined as sides connecting the two parallel first sides 6a1, 6b1, respectively, and may include a straight line and a curved line. The elongated shape refers to, for example, a rectangular shape, a flattened elliptical shape, or the like.

Thus, since the through holes 6a, 6b have an elongated shape, the distance between the electrodes 7a, 7b can be shortened. This increases the capacitance accumulated between the electrodes 7a, 7b, which makes it possible to improve the measurement accuracy of the void fraction of the cryogenic liquid and to maintain the supply amount of the cryogenic liquid. Since a first partition wall 11 between the adjacent through holes 6a, 6b functions as a support, the pressure resistance performance of the insulating pipe 5 is improved.

Since the two through holes 6a, 6b are arranged in the first direction (x-direction), the thickness of the insulating pipe 5 can be reduced. The aspect ratio (long axis/short axis) of the long axis parallel to the first direction (x-direction) and the short axis parallel to the second direction (y-direction) is, for example, 5 or more and 8 or less. The long axis is an axis that passes through the axial centers of the through holes 6a, 6b and is parallel to the first direction (x-direction), and the short axis is an axis that passes through the axial centers of the through holes 6a, 6b and is parallel to the second direction (y-direction).

As illustrated in FIGs. 5 and 6 (an enlarged view of a portion P in FIG. 3), the electrodes 7a, 7b face each other across the through holes 6a, 6b in the second direction. A conductive pin 8 is connected to each of the electrodes 7a, 7b. The conductive pin 8 constitutes an airtight terminal together with an insulation substrate 9 having an insertion hole and a flange 10. The insulation substrate 9 has a circular shape, and the conductive pin 8 is fixed in the insertion hole with a brazing material or the like. The flange 10 surrounds the insulation substrate 9. The flange 10 is fixed to the vacuum container 4. Therefore, the airtight terminal is connected to the vacuum container 4. The airtight terminal reduces leakage of the cryogenic liquid from the void fraction sensor 1 to the outside. As a result, the measurement accuracy of the void fraction is improved.

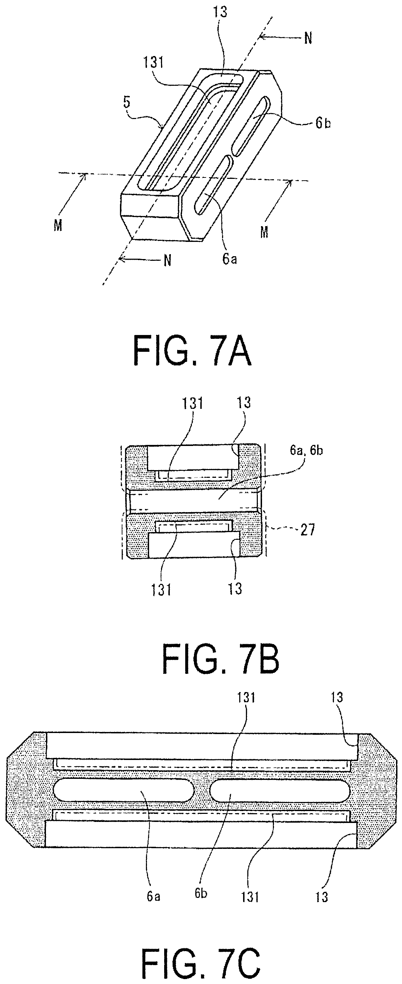

As illustrated in FIGs. 7A to 7C, the insulating pipe 5 has two through holes 6a, 6b in the first direction and opening portions 13 for accommodating the plate-shaped electrodes 7a, 7b in the second direction, and the electrodes 7a, 7b are located in recessed portions 131 located at the bottom of the opening portions 13.

The electrodes 7a, 7b include, for example, a copper thin film, an aluminum thin film, or the like. Each electrode 7a, 7b can be formed on the bottom surface of a respective one of the recessed portions 131 by, for example, vacuum evaporation, metallization, or using an active metal method. Alternatively, a metal plate serving as the electrode 7a, 7b may be bonded to the bottom surface of the recessed portion 131. The thicknesses of the electrodes 7a, 7b may be 0.1 µm or more, preferably 20 µm or more, and may be 2 mm or less, preferably 1 mm or less.

Examples of a ceramic constituting the insulating pipe 5 include ceramics containing zirconia, alumina, sapphire, aluminum nitride, silicon nitride, sialon, cordierite, mullite, yttria, silicon carbide, cermet, and β-eucryptite as a main component. When the ceramic includes a ceramic containing alumina as a main component, the ceramic may contain an oxide of silicon, calcium, magnesium, sodium, or the like.

The main component of a ceramic refers to a component accounting for at least 60 mass% out of 100 mass% of all components constituting the ceramic. In particular, the main component may preferably be a component that accounts for at least 95 mass% out of 100 mass% of the components constituting the ceramic. The components constituting the ceramic may be obtained by using an X-ray diffractometer (XRD). For the content of each component, after the component is identified, a content of an element constituting the component is determined using an X-ray fluorescence analyzer (XRF) or an ICP emission spectrophotometer and is converted into the identified component.

The insulating pipe 5 preferably contains a low-thermal-expansion ceramic. The low-thermal-expansion ceramic refers to a ceramic having a coefficient of linear expansion of $0\pm20$ ppb/K or less at 22°C, where the temperature range for measuring the coefficient of linear expansion is from 0°C to 50°C. The low-thermal-expansion ceramic having a low coefficient of linear expansion reduces the risk of breakage of the low thermal expansion ceramic when it is subjected to a thermal shock caused by a cryogenic liquid. The coefficient of linear expansion of the low-thermal-expansion ceramic may be determined using, for example, an optical heterodyne common-path interferometer.

Specifically, the low-thermal-expansion ceramic preferably contains cordierite as a main crystal phase, alumina, mullite, and sapphirine as a sub-crystal phase, and an amorphous phase containing Ca as a grain boundary phase. The crystal phase ratio of the main crystal phase may account for 95 mass% to 97.5 mass%, and the crystal phase ratio of the sub-crystal phase may account for 2.5 mass% to 5 mass%. The content of Ca in the total amount may be 0.4 mass% or more and 0.6 mass% or less in terms of CaO. In addition, zirconia may be contained, with a content of zirconia in the total amount being 0.1 mass% or more and 1.0 mass% or less. Thus, the low-thermal-expansion ceramic can be used over a long period of time, as it does not expand or contract easily even when the temperature of the cryogenic liquid changes greatly. Such a low-thermal-expansion ceramic is described in Japanese Patent No. 5430389 B, for example.

The ceramic constituting the insulating pipe 5 preferably has a relative permittivity of 11 or less in an operating temperature range. The cryogenic liquid has a small relative permittivity, and when the relative permittivity of the ceramic is small, it becomes close to that of the cryogenic liquid. This improves a high-frequency characteristic, leading to further improvement of the measurement accuracy of the void fraction. In particular, when the relative permittivity of the ceramic is 11 or less, the measurement accuracy of the void fraction of the cryogenic liquid can further be improved. The operating temperature range refers to a temperature range of the ceramic constituting the insulating pipe 5 during transfer of the cryogenic liquid.

The insulating pipe 5 may contain a ceramic containing silicon nitride or sialon as a main component. Having a high mechanical strength and a thermal shock resistance, these ceramics have less likelihood of breakage even when they are subjected to thermal shock.

Specifically, these ceramics contain calcium oxide, aluminum oxide, and an oxide of a rare earth element. The contents of calcium oxide and aluminum oxide are from 0.3 mass% to 1.5 mass% and from 14.2 mass% to 48.8 mass%, respectively, out of the total of 100 mass% of calcium oxide, aluminum oxide, and the oxide of the rare earth element. The remainder is the oxide of the rare earth element. The silicon nitride is β-sialon represented by a composition formula $Si_{6-z}Al_zO_zN_{8-z}$ (z = 0.1 to 1) and has an average crystal grain size of 20 $\mu$m or less (excluding 0 $\mu$m). Such a ceramic is described in Japanese Patent No. 5430389 B, for example.

At least in the insulating pipe 5, an arithmetic mean roughness Ra in the roughness curve of the inner wall surfaces in the direction parallel to the axial center of the through hole 6a, 6b is preferably 0.2 $\mu$m or less. The inner wall surfaces having the arithmetic mean roughness Ra in the roughness curve of 0.2 $\mu$m or less can reduce the increase in the flow resistance of the cryogenic liquid caused by the inner wall surfaces, and provide a stable flow velocity distribution of the cryogenic liquid. That is, the reduced variation in the flow velocity can improve the measurement accuracy of the void fraction of the cryogenic liquid.

The arithmetic mean roughness Ra can be measured in accordance with JIS B 0601:2001 using a laser microscope (an ultra-deep color 3D profile measuring microscope (VK-X1000 or a successor model thereof) manufactured by KEYENCE CORPORATION). The measurement conditions were set as follows: the illumination system was coaxial illumination, the measurement magnification was 240x, no cut-off value λs was set, the cut-off value λc was 0.08 mm, the end effect was corrected, and the measurement range was 1425 $\mu$m × 1067 $\mu$m. The line roughness is measured by drawing four lines to be measured at substantially equal intervals in the measurement range. The length of a single line to be measured is 1280 $\mu$m.

The relative density of a ceramic is, for example, from 92% to 99.9%. The relative density, relative to the theoretical density of a ceramic, is expressed as a percentage (ratio) of the apparent density of a ceramic which is determined in accordance with JIS R 1634-1998.

The insulating pipe 5 contains a ceramic having a plurality of closed pores, and a value obtained by subtracting an average equivalent circle diameter of the closed pores from an average distance between the centers of gravity of adjacent closed pores (this value is hereinafter referred to as the interval between the closed pores) may be from 8 $\mu$m to 18 $\mu$m. The closed pores are independent of each other. When the interval between the closed pores is 8 $\mu$m or greater, the closed pores are present in a relatively dispersed manner which increases mechanical strength. When the interval between the closed pores is 18 $\mu$m or less, even if a microcrack originating from the contour of a closed pore occurs due to repeated cold thermal shocks, the likelihood of the extension of the microcrack being blocked is high due to the surrounding closed pores. This means that the insulating pipe 5 having an interval between closed pores from 8 $\mu$m to 18 $\mu$m can be used over a long period of time.

The skewness of the equivalent circle diameter of the closed pores may be larger than the skewness of the distance between the centers of gravity of the closed pores. The skewness is an index (a statistic) indicating how much a distribution is distorted from the normal distribution. That is, the skewness indicates the bilateral symmetry of the distribution. When the skewness is greater than 0, the tail of the distribution extends to the right. When the skewness is 0, the distribution is bilaterally symmetrical. When the skewness is less than 0, the tail of the distribution extends to the left.

Overlapping histograms of the equivalent circle diameter and the distance between the centers of gravity of the closed pores indicates that the mode value of the equivalent circle diameter is located on the left side (zero side) of the mode value of the distance between the centers of gravity of the closed pores when the skewness of the equivalent circle diameter is larger than the skewness of the distance between the centers of gravity. This means that many closed pores with small equivalent circle diameters are present and such closed pores are present sparsely, so that the ceramic member having both mechanical strength and thermal shock resistance can be obtained.

For example, the skewness of the equivalent circle diameter of the closed pores is at least 1, and the skewness of the distance between the centers of gravity of the closed pores is 0.7 or less. The difference between the skewness of the equivalent circle diameter of the closed pores and the skewness of the distance between the centers of gravity of the closed pores is at least 0.3.

To determine the distance between the centers of gravity and the equivalent circle diameter of the closed pores, the insulating pipe 5 containing the ceramic is polished on a copper disc using diamond abrasive grains having an average grain diameter $D_{50}$ of 3 $\mu$m from one end surface of the pipe along the axial direction. Subsequently, polishing is then performed on a tin disc using diamond abrasive grains having an average grain diameter $D_{50}$ of 0.5 $\mu$m to obtain a polished surface having an arithmetic mean roughness Ra of 0.2 $\mu$m or less in the roughness curve.

The arithmetic mean roughness Ra of the polished surface can be measured by the method described above. The polished surface is observed at 200x magnification and an average range is selected. A range with an area of, for example, $7.2 \times 10^4$ $\mu$m2 (horizontal length

310 $\mu$m by vertical length 233 $\mu$m) is captured with a CCD camera to obtain an observation image. For this observation image, the distance between the centers of gravity of the closed pores is obtained by a method called a distance between centers of gravity method for dispersivity measurement by using the image analysis software "A zou-kun (ver 2.52)" (trade name, manufactured by Asahi Kasei Engineering Corporation). Hereinafter, the image analysis software "A zou-kun" means the image analysis software manufactured by Asahi Kasei Engineering Corporation.

For example, the setting conditions for this method can be as follows: the threshold is 165 which is used as a measure of image brightness/darkness, the brightness level is set to dark, the small figure removal area is 1 $\mu$m$^2$, and no noise reduction filter is set. The threshold value may be adjusted according to the brightness of the observation image. After the brightness is set to dark, the binarization method is set to manual, the small figure removal area is set to 1 $\mu$m$^2$, and the noise removal filter is used, the threshold value may be adjusted in such a manner that a marker appearing in the observation image matches the shape of the closed pores. A particle analysis method may be performed on the above observation image as a target to determine the equivalent circle diameter of the closed pores. The setting conditions for this method may be the same as the setting conditions for calculating the distance between the centers of gravity of the closed pores. The skewness of the equivalent circle diameter and the distance between the centers of gravity of the closed pores can be calculated using the Skew function provided in Excel (trade name of Microsoft Corporation).

An example of a method for manufacturing the insulating pipe 5 containing a ceramic is described. A case where the main component of the ceramic forming the insulating pipe 5 is alumina will be described.

An aluminum oxide powder (of a purity equal to or larger than 99.9 mass%) serving as the main component and each powder of magnesium hydroxide, silicon oxide, and calcium carbonate are fed into a grinding mill together with a solvent (ion exchange water). After grinding is performed until an average particle size ($D_{50}$) of the powder becomes equal to or less than 1.5 $\mu$m, an organic binder and a dispersing agent that disperses the aluminum oxide powder are added and mixed to obtain a slurry.

Of the total of 100 mass% of the powders described above, the content of magnesium hydroxide powder is from 0.3 to 0.42 mass%, the content of silicon oxide powder is from 0.5 to 0.8 mass%, and the content of calcium carbonate powder is from 0.06 to 0.1 mass%. The remainder includes aluminum oxide powder and incidental impurities. Examples of the organic binder include acrylic emulsion, polyvinyl alcohol, polyethylene glycol, polyethylene oxide, and the like.

Subsequently, the slurry is spray-granulated to obtain granules which are then pressurized at a molding pressure from 78 MPa to 118 MPa using a uniaxial press molding device or a cold isostatic press molding device to obtain a columnar powder compact. The powder compact is cut, if necessary, to form a recess which becomes a recessed portion 131 after firing. Subsequently, the powder compact is fired at a firing temperature of from 1580°C to 1780°C and for a retention time of from 2 hours to 4 hours to obtain an insulating pipe 5.

To obtain the insulating pipe 5 having an interval between the closed pores from 8 $\mu$m to 18 $\mu$m, the firing temperature is set from 1600°C to 1760°C and the retention time is set from 2 hours to 4 hours to fire the powder compact. To obtain the insulating pipe 5 having a skewness of the equivalent circle diameter of the closed pores larger than the skewness of the distance between the centers of gravity of the closed pores, the powder compact which is obtained by pressing at a molding pressure of from 96 MPa to 118 MPa may be fired at a firing temperature of from 1600°C to 1760°C and for a retention time of from 2 hours to 4 hours. The inner wall surfaces of the through holes 6a, 6b of the insulating pipe 5 may be ground. The bottom surface of the recessed portion 131 to which the electrode 7a, 7b is mounted may be ground.

As described above, the insulating pipe 5 has two elongated through holes 6a, 6b. On the other hand, the cross sections of the flow paths of the supply-side transfer pipe 2 and the discharge-side transfer pipe 3 connected to the void fraction sensor 1 may have a circular shape. Therefore, in order to cause the cryogenic liquid to flow from the supply-side transfer pipe 2 to the discharge-side transfer pipe 3 through the insulating pipe 5, it is necessary to change the cross-sectional shape of the flow paths.

Therefore, as illustrated in FIGs. 3 and 4, a supply-side converter 14 and a discharge-side converter 15 for converting the cross-sectional shape of the flow paths are located on both sides (i.e., the supply side and the discharge side) of the insulating pipe 5 in the vacuum container 4. The supply-side converter 14 and the discharge-side converter 15 have distribution holes 14a, 15a through which the cryogenic liquid flows. The cross-sectional shape of one end 141a of the distribution hole 14a and one end 151a of the distribution hole 15a is a circular shape to which the circular supply-side transfer pipe 2 and discharge-side transfer pipe 3 are connected. The cross-sectional shape of other ends 141b, 151b is an elongated shape in which the length in the second direction of the insulating pipe 5 (that is, y-direction illustrated in FIG. 5) is shorter than the length in the first direction of the insulating pipe 5 (that is, x-direction illustrated in FIG. 5). Thus, the supply amount of the cryogenic liquid can be maintained without being reduced.

While the supply-side converter 14 and the discharge-side converter 15 may be directly connected to the insulating pipe 5, the supply-side converter 14 is connected to the insulating pipe 5 via a supply pipe 16 and the discharge-side converter 15 is connected to the insulating pipe 5 via a discharge pipe 17 as illustrated in FIGs. 3 and 4 in the present embodiment.

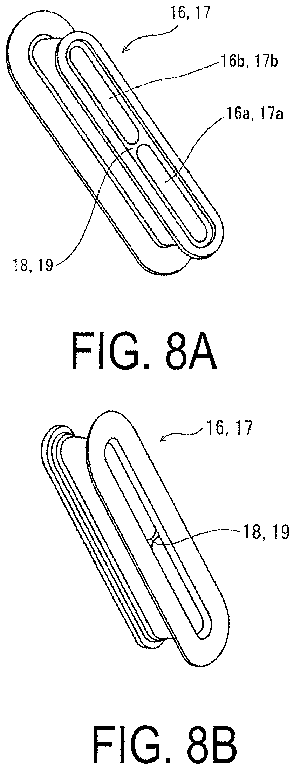

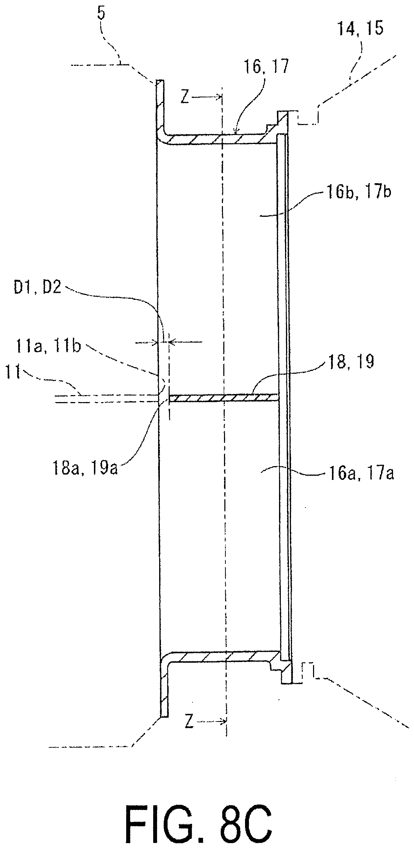

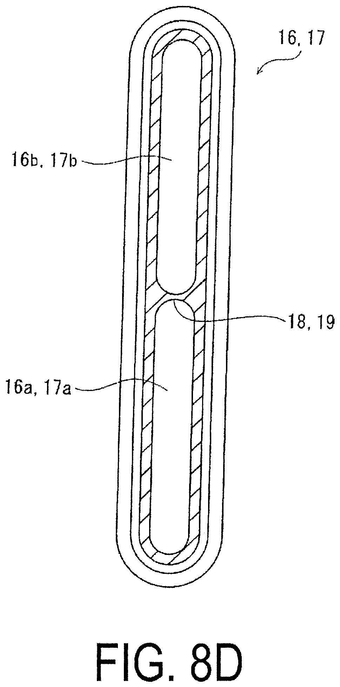

FIGs. 8A to 8D illustrate the supply pipe 16 and the discharge pipe 17. FIG. 8A is a perspective view of the supply pipe 16 and the discharge pipe 17 as seen from the supply-side converter 14 side and the discharge-side converter 15 side, and FIG. 8B is a perspective view as seen from the insulating pipe 5 side. FIG. 8C is a vertical cross-sectional view of the supply pipe 16 and the discharge pipe 17 illustrated in FIGs. 8A and 8B, and FIG. 8D is a cross-sectional view taken along line Z-Z indicated in FIG. 8C.

The supply pipe 16 illustrated FIG. 4 is disposed on the supply side of the insulating pipe 5 and has two supply holes 16a, 16b. Each of the supply holes 16a, 16b has the same elongated shape in a cross section perpendicular to the flow direction of the cryogenic liquid as each of the plurality of through holes 6a, 6b in the cross section. The two supply holes 16a, 16b may respectively face the two through holes 6a, 6b of the insulating pipe 5.

In this way, the two supply holes 16a, 16b face the two through holes 6a, 6b. As a result, generation of voids is reduced at the portions where the supply holes 16a, 16b are connected to the through holes 6a, 6b, and the measurement accuracy of the void fraction of the cryogenic liquid can be further improved. A portion that separates the supply holes 16a, 16b is present between the adjacent supply holes 16a, 16b as a second partition wall 18. Therefore, since the second partition wall 18 functions as a support, the pressure resistance performance of the supply pipe 16 is improved.

As described above, the portion of the insulating pipe 5 that separates the adjacent through holes 6a, 6b from each other is the first partition wall 11 (see FIG. 5), and the portion of the supply pipe 16 that separates the adjacent supply holes 16a, 16b from each other is the second partition wall 18. In this case, as illustrated in FIG. 8C, a second facing surface 18a of the second partition wall 18 on the insulating pipe 5 side is not in contact with a first facing surface 11a of the first partition wall 11 on the supply pipe 16 side, and there is a gap D1 between the facing surfaces 11a, 18a.

Since the first facing surface 11a has the gap D1 with the second facing surface 18a and is not joined to the second facing surface 18a in this way, stresses generated in the first facing surface 11a of the first partition wall 11 can be reduced. The gap D1 is preferably equal to or less than 1 mm (but not 0 mm). Thus, it is possible to reduce the stresses generated in the first facing surface 11a and to reduce the generation of voids due to the mixing of the cryogenic liquid flowing through the adjacent through holes 6a, 6b, and thus it is possible to improve the measurement accuracy of the void fraction of the cryogenic liquid.

The discharge pipe 17 disposed on the opposite side to the supply pipe 16 has the same structure as the supply pipe 16 and also has the same configuration and function. Therefore, the discharge pipe 17 will also be described below with reference to FIG. 8C. That is, the discharge pipe 17 has two discharge holes 17a, 17b, and the discharge holes 17a, 17b face the two through holes 6a, 6b, respectively. A portion that separates the discharge holes 17a, 17b is present between the two adjacent discharge holes 17a, 17b as a third partition wall 19, which functions as a support.

When a portion partitioning the adjacent through holes 6a, 6b of the insulating pipe 5 is defined as a first partition wall 11 (see FIG. 5) and a portion partitioning the adjacent discharge holes 17a, 17b of the discharge pipe 17 is defined as a third partition wall 19, a third facing surface 19a of the third partition wall 19 on the insulating pipe 5 side is not in contact with a fourth facing surface 11b of the first partition wall 11 on the discharge pipe 17 side, and there is a gap D2 between the facing surfaces 11b, 19a, as illustrated in FIG. 8C. Like the gap D1 described above, the gap D2 also is preferably equal to or less than 1 mm (but not 0 mm). Other portions are the same as those of the supply pipe 16 described above, and detailed description thereof will be omitted.

A first covering portion including a metallized layer is located on an end surface of the insulating pipe 5 on the supply pipe 16 side except for the first facing surface 11a. The first facing surface 11a is excluded in order to reduce unintended adhesion of a brazing material to the metallized layer at the first facing surface 11a when the insulating pipe 5 and the supply pipe 16 are joined by brazing. Thus, the first facing surface 11a is less likely to be joined to the second facing surface 18a of the supply pipe 16, and an increase in stress generated in the first facing surface 11a of the first partition wall 11 can be reduced. Similarly, a second covering portion including a metallized layer is located on an end surface of the insulating pipe 5 on the discharge pipe 17 side except for the fourth facing surface 11b.

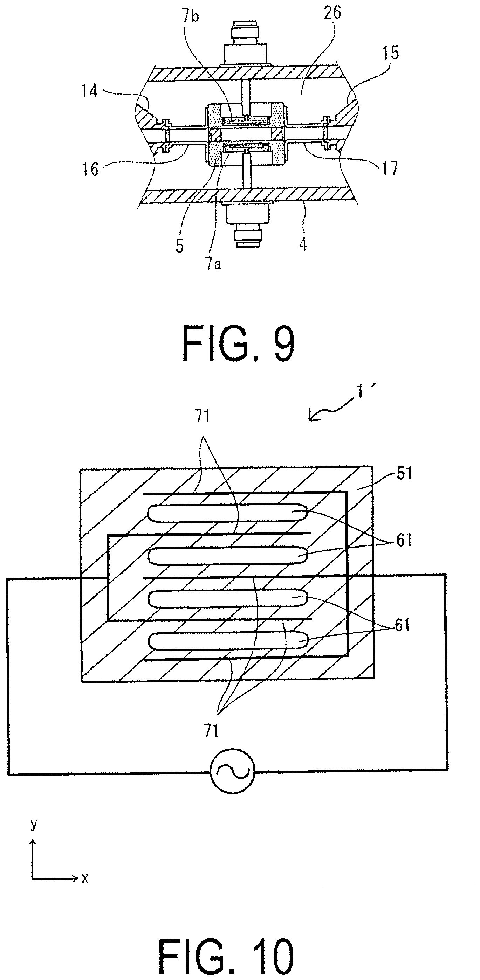

FIG. 9 is a cross-sectional view taken along line IX-IX in FIG. 2. As illustrated in the drawing, the supply pipe 16 and the discharge pipe 17 for the cryogenic liquid are connected to respective ends of the insulating pipe 5, and the supply-side converter 14 is connected to the upstream side of the supply pipe 16, and the discharge-side converter 15 is connected to the downstream side of the discharge pipe 17. The supply pipe 16 and the discharge pipe 17 are made of metal and brazed to the insulating pipe 5. Specifically, the supply pipe 16 and the discharge pipe 17 are preferably made of, for example, an austenitic stainless steel (for example, SUS316L) having a nickel content of at least 10.4 mass%, a Fernico alloy, an Fe-Ni alloy, an Fe-Ni-Cr-Ti-Al alloy, an Fe-Cr-Al alloy, an Fe-Co-Cr alloy, or the like. The supply-side converter 14 and the discharge-side converter 15 also are preferably made of the same metal.

Returning to FIGs. 3 and 4, the supply-side transfer pipe 2 connected to the supply-side converter 14 is surrounded by a supply-side bellows 20 which is a flexible tube. When the cryogenic liquid flows, the supply-side transfer pipe 2 is likely to contract while the vacuum container 4 itself is less likely to contract. Therefore, the supply-side bellows 20 functions as a buffer material that reduces a difference in contraction between the supply-side transfer pipe 2 and the vacuum container 4. The discharge-side transfer pipe 3 connected to the discharge-side converter 15 is also surrounded by a discharge-side bellows 21 which is the same as or similar to the supply-side bellows 20.

The supply-side bellows 20 and the discharge-side bellows 21 are connected to respective ends of the cylindrical vacuum container 4 via flanges 22. The connection is vacuum-tight. The upstream opening of the supply-side bellows 20 and the downstream opening of the discharge-side bellows 21 are sealed by respective bellows joints 23 to maintain vacuum tightness. At least one of the outer peripheral surfaces of the supply-side transfer pipe 2 surrounded by the supply-side bellows 20, the supply-side converter 14, the discharge-side converter 15, the insulating pipe 5, and the discharge-side transfer pipe 3 surrounded by the discharge-side bellows 21 is preferably covered with a thermal insulation material 27. The thermal insulation material 27 is, for example, a film of polyester, polystyrene, polypropylene, or the like.

FIG. 10 illustrates another embodiment of the present disclosure. As illustrated in the drawing, a void fraction sensor 1' includes a plurality of through holes 61 provided in an insulating pipe 51 to enable the cryogenic liquid to flow therethrough, and a plurality of electrodes 71 disposed in the insulating pipe 51 so as to face each other across respective ones of the through holes 61. Each of the plurality of through holes 61 has an elongated shape having a first direction (x-direction) and a second direction (y-direction) in a cross section perpendicular to the flow direction of the cryogenic liquid. The plurality of electrodes 71 face each other across the plurality of through holes 61 in the second direction. The plurality of through holes 61 communicate with the converters 14, 15 via the supply pipe 16 and the discharge pipe 17, respectively, as in the above-described embodiment. Other portions are the same as those of the embodiment described above.

The flowmeter according to the embodiments of the present disclosure is described. This flowmeter can measure the flow rate of the cryogenic liquid flowing through the through holes 6a, 6b or the through holes 61. The flowmeter includes the void fraction sensor 1 or the void fraction sensor 1' and a flow velocity meter (not illustrated). The void fraction sensor 1 or the void fraction sensor 1' and the flow velocity meter are attached to the supply-side transfer pipe 2 and/or the discharge-side transfer pipe 3.

The cryogenic liquid flowing through the supply-side transfer pipe 2 and the discharge-side transfer pipe 3 is a two-phase flow in which a gas and a liquid are mixed. Therefore, the void fraction sensor 1 or the void fraction sensor 1' measures the void fraction, from which a density d ($kg/m^3$) of the cryogenic liquid is determined. This is because the density d of the cryogenic liquid corresponds to the relative permittivity, and thus also corresponds to the capacitance measured by the void fraction sensor 1 or the void fraction sensor 1'.

A flow rate F (kg/s) of the cryogenic liquid is determined by the following equation, where v is the flow velocity (m/s) of the cryogenic liquid determined by the flow velocity meter, and a is the cross-sectional area ($m^2$), perpendicular to the flow direction of the cryogenic liquid, of the through holes 6a, 6b or the through holes 61 interposed between the electrodes 7a, 7b or the electrodes 71.

$$F = d \times v \times a$$

To calculate this equation, the flowmeter further includes a calculator to which the void fraction sensor 1 or the void fraction sensor 1' and the flow velocity meter are connected. This facilitates the measurement of the flow rate of the cryogenic liquid, leading to easier control of the cryogenic liquid when transferring a large amount of cryogenic liquid for industrial use.

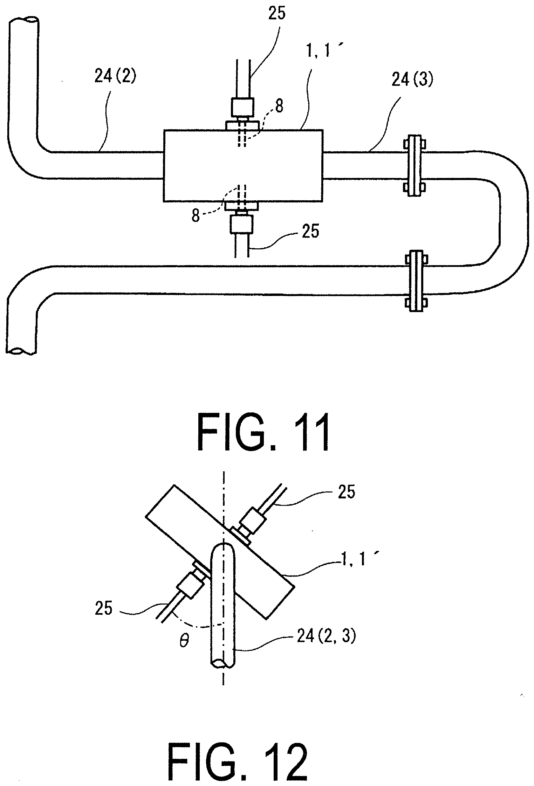

FIG. 11 illustrates an example of a transfer pipe 24 according to the present disclosure including the flowmeter. FIG. 11 schematically illustrates an example in which the void fraction sensor 1 or the void fraction sensor 1' of the flowmeter is attached to the bent transfer pipe 24, and wiring 25 is connected to the conductive pin 8 of the void fraction sensor 1 or the void fraction sensor 1'.

At this time, there is a possibility that the installation of the wiring 25 is obstructed if the supply side or the discharge side of the bent transfer pipe 24 is close to the void fraction sensor 1 or the void fraction sensor 1'. Therefore, the void fraction sensor 1 or the void fraction sensor 1' is preferably inclined with respect to a bent portion of the transfer pipe 24 (hereinafter referred to as a bent portion), as illustrated in FIG. 12. An inclination angle θ of the void fraction sensor 1 or the void fraction sensor 1' is preferably 10° or more and 90° or less with respect to the axial center of the bent portion of the transfer pipe 24 illustrated in FIG. 12. The transfer pipe 24 is, for example, a U-shaped pipe or a J-shaped pipe.

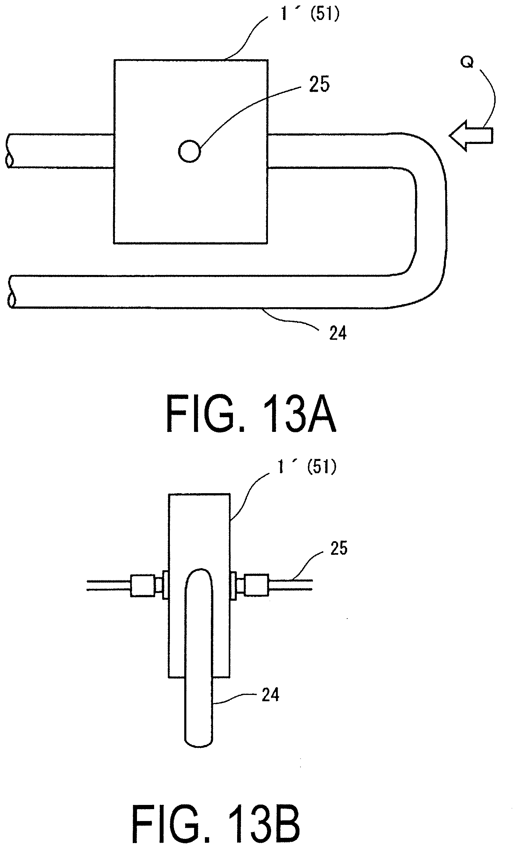

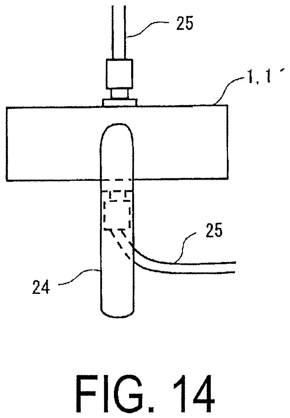

In particular, when the insulating pipe 51 is large as in the void fraction sensor 1' according to another embodiment of the present disclosure, the wiring 25 may be inclined with respect to the transfer pipe 24, as illustrated in FIGs. 13A and 13B. FIG. 13B is a schematic side view of the void fraction sensor 1' illustrated in FIG. 13A as seen from the arrow Q direction. While the wiring 25 is inclined at 90° with respect to the axial center of the bent portion of the transfer pipe 24 in FIG. 13B, the wiring 25 may be inclined at 10° or more and 90° or less. The wiring 25 may be disposed in the same direction as the bent portion of the transfer pipe 24 as illustrated in FIG. 14 as long as the installation of the wiring 25 is not obstructed.

Examples of the cryogenic liquid to be measured by the void fraction sensor 1 and the void fraction sensor 1' of the present disclosure include liquid hydrogen (-253°C), liquid nitrogen (-196°C), liquid helium (-269°C), liquefied natural gas (-162°C), and liquid argon (-186°C) (the values in parentheses indicate liquefaction temperatures). Therefore, in the present disclosure, the term "cryogenic liquid" as used herein means a liquid that is liquefied at a cryogenic temperature of -162°C or lower.

As described above, according to the present disclosure, the plurality of through holes 6a, 6b, 61 located in the insulating pipe 5, 51 have an elongated shape having a first side in a first direction and a second side shorter than the first side in a second direction in a cross section perpendicular to the flow direction of the liquid. The plurality of electrodes 7a, 7b or electrodes 71 face each other across the plurality of through holes 6a, 6b or through holes 61 in the second direction. Therefore, the distance between the electrodes 7a, 7b or the electrodes 71 can be shortened. As a result, the capacitance accumulated between the electrodes 7a, 7b or the electrodes 71 is increased, as a result of which it is possible to improve the measurement accuracy of the void fraction of the liquid and to maintain the supply amount of the liquid.

While the preferred embodiments of the present disclosure have been described above, the void fraction sensor according to the present disclosure is not limited thereto, and many changes and/or improvements can be made within the range set forth in the present disclosure.

REFERENCE SIGNS

1, 1' Void fraction sensor
2 Supply-side transfer pipe
3 Discharge-side transfer pipe
4 Vacuum container
5, 51 Insulating pipe
6a, 6b, 61 Through hole
6a1, 6b1 First side
6a2, 6b2 Second side
7a, 7b, 71 Electrode
8 Conductive pin
9 Insulation substrate
10 Flange
11 First partition wall
11a First facing surface
11b Fourth facing surface
12 Vacuum exhaust valve
13 Opening portion
131 Recessed portion
14 Supply-side converter
14a Distribution hole
141a One end
141b Other end
15 Discharge-side converter
15b Distribution hole
151a One end
151b Other end
16 Supply pipe

16a Supply hole
17 Discharge pipe
17a Discharge hole
18 Second partition wall
18a Second facing surface
19 Third partition wall
19a Third facing surface
20 Supply-side bellows
21 Discharge-side bellows
22 Flange
23 Bellows joint
24 Transfer pipe
25 Wiring
26 Vacuum space
27 Thermal insulation material
D1, D2 Gap

## Claims

1. A void fraction sensor comprising:

   an insulating pipe having a plurality of through holes through which a liquid flows; and
   at least two electrodes located inside or on an outer surface of the insulating pipe and facing each other across the plurality of through holes, wherein
   each of the plurality of through holes has, in a cross section perpendicular to a flow direction of the liquid, an elongated shape having a first side in a first direction and a second side shorter than the first side in a second direction, and
   the at least two electrodes face each other in the second direction, with the plurality of through holes located between the at least two electrodes.

2. The void fraction sensor according to claim 1, wherein
   the plurality of through holes are arranged in the first direction.

3. The void fraction sensor according to claim 1, wherein
   the plurality of through holes are arranged in the second direction.

4. The void fraction sensor according to any one of claims 1 to 3, wherein:

   a supply pipe having a plurality of supply holes is disposed on a supply side of the insulating pipe; and
   each of the plurality of supply holes has the same shape as the cross section of each of the plurality of through holes in a cross section perpendicular to the flow direction of the liquid, and faces each of the plurality of through holes.

5. The void fraction sensor according to claim 4, wherein
when a portion of the insulating pipe that separates adjacent through holes is defined as a first partition wall and a portion of the supply pipe that separates adjacent supply holes is defined as a second partition wall, a second facing surface of the second partition wall on a side of the insulating pipe is not in contact with a first facing surface of the first partition wall on a side of the supply pipe.

6. The void fraction sensor according to claim 5, wherein
a gap between the first facing surface and the second facing surface is equal to or less than 1 mm.

7. The void fraction sensor according to claim 5 or 6, wherein
a first covering portion comprising a metallized layer is located on an end surface of the insulating pipe on a side of the supply pipe except for the first facing surface.

8. The void fraction sensor according to any one of claims 1 to 7, wherein:

a discharge pipe having a plurality of discharge holes is disposed on a discharge side of the insulating pipe; and
each of the plurality of discharge holes has the same shape as the cross section of each of the plurality of through holes in a cross section perpendicular to the flow direction of the liquid, and faces each of the plurality of through holes.

9. The void fraction sensor according to claim 8, wherein
when a portion of the insulating pipe that separates adjacent ones of the through holes is defined as a first partition wall and a portion of the discharge pipe that separates adjacent ones of the through holes is defined as a third partition wall, a third facing surface of the third partition wall on a side of the insulating pipe is not in contact with a fourth facing surface of the first partition wall on a side of the discharge pipe.

10. The void fraction sensor according to claim 9, wherein
a gap between the third facing surface and the fourth facing surface is equal to or less than 1 mm.

11. The void fraction sensor according to claim 9 or 10, wherein
a second covering portion comprising a metallized layer is located on an end surface of the insulating pipe on a side of the discharge pipe except for the fourth facing surface.

12. A flowmeter for measuring a flow rate of a liquid flowing through the through holes, comprising:

the void fraction sensor according to any one of claims 1 to 11; and
a flow velocity meter configured to measure a flow velocity at which the liquid flows in the through holes.

13. A liquid transfer pipe comprising the flowmeter according to claim 12.

# FIG. 1

# FIG. 2

FIG. 3

FIG. 4

FIG. 5

FIG. 6

FIG. 7A

FIG. 7B

FIG. 7C

16, 17

16b, 17b

16a, 17a

18, 19

# FIG. 8A

16, 17

18, 19

# FIG. 8B

FIG. 8C

16, 17

16b, 17b

18, 19

16a, 17a

# FIG. 8D

# FIG. 9

# FIG. 10

25

24 (2)

1, 1´

24 (3)

8

8

25

# FIG. 11

25

1, 1´

25

θ

24 (2, 3)

# FIG. 12

1´ (51)

25

Q

24

# FIG. 13A

1´ (51)

25

24

# FIG. 13B

FIG. 14

## INTERNATIONAL SEARCH REPORT

| International application No. |
|---|
| **PCT/JP2023/020115** |

### A. CLASSIFICATION OF SUBJECT MATTER

***G01N 27/22***(2006.01)i
FI: G01N27/22 B

According to International Patent Classification (IPC) or to both national classification and IPC

### B. FIELDS SEARCHED

Minimum documentation searched (classification system followed by classification symbols)

G01N27/00-27/24; G01N7/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| A | JP 2002-39979 A (TOHOKU TECHNO ARCH CO., LTD.) 06 February 2002 (2002-02-06) | 1-13 |
| A | JP 2007-64822 A (TOYOTA MOTOR CORP.) 15 March 2007 (2007-03-15) | 1-13 |
| A | KR 10-1646056 B1 (KOREA ATOMIC ENERGY RESEARCH INSTITUTE) 09 August 2016 (2016-08-09) | 1-13 |
| A | KR 10-2005-0026307 A (KOREA ATOMIC ENERGY RESEARCH INSTITUTE) 15 March 2005 (2005-03-15) | 1-13 |

☐ Further documents are listed in the continuation of Box C.    ☑ See patent family annex.

| | |
|---|---|
| \*    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **14 August 2023** | **22 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

23

## INTERNATIONAL SEARCH REPORT
### Information on patent family members

International application No.

**PCT/JP2023/020115**

| Patent document cited in search report | | | Publication date (day/month/year) | Patent family member(s) | Publication date (day/month/year) |
|---|---|---|---|---|---|
| JP | 2002-39979 | A | 06 February 2002 | (Family: none) | |
| JP | 2007-64822 | A | 15 March 2007 | (Family: none) | |
| KR | 10-1646056 | B1 | 09 August 2016 | (Family: none) | |
| KR | 10-2005-0026307 | A | 15 March 2005 | (Family: none) | |

Form PCT/ISA/210 (patent family annex) (January 2015)

## REFERENCES CITED IN THE DESCRIPTION

**Patent documents cited in the description**

• JP 5430389 B

**Non-patent literature cited in the description**

• **NORIHIDE MAENO et al.** Void Fraction Measurement of Cryogenic Two Phase Flow Using a Capacitance Sensor. *Trans. JSASS Aerospace Tech. Japan*, 2014, vol. 12 (29), 101-107